(19) Europäisches Patentamt
European Patent Office
Office européen des brevets

(11) Veröffentlichungsnummer : **0 084 310**
**B1**

(12) # EUROPÄISCHE PATENTSCHRIFT

(45) Veröffentlichungstag der Patentschrift : **28.08.85**

(51) Int. Cl.⁴ : **A 01 N 25/02**, A 01 N 25/08, A 01 N 57/14

(21) Anmeldenummer : **83100009.6**

(22) Anmeldetag : **04.01.83**

(54) **Ameisenköder, Verfahren zu deren Herstellung und deren Verwendung.**

(30) Priorität : **14.01.82 DE 3200909**

(43) Veröffentlichungstag der Anmeldung : **27.07.83 Patentblatt 83/30**

(45) Bekanntmachung des Hinweises auf die Patenterteilung : **28.08.85 Patentblatt 85/35**

(84) Benannte Vertragsstaaten : **AT BE CH DE FR GB IT LI NL**

(56) Entgegenhaltungen :
**DE-A- 2 261 685**
**DE-B- 1 238 902**
**DE-C- 749 194**
**JOURNAL OF ECONOMIC ENTOMOLOGY, Band 63, Nr. 6, 15. Dezember 1970, Seiten 1971-1973, Maryland, USA, J.S. WANG et al.: "Toxicological and biological studies of the odorous house ant, Tapinoma sessile"**

(73) Patentinhaber : **BAYER AG**
**Konzernverwaltung RP Patentabteilung**
**D-5090 Leverkusen 1 Bayerwerk (DE)**

(72) Erfinder : **Krehan, Ingomar, Dr.**
**Ludwig-Jahn-Strasse 54**
**D-5000 Köln 40 (DE)**
Erfinder : **Telle, Otto**
**Haferkamp 10**
**D-5000 Köln 80 (DE)**
Erfinder : **Behrenz, Wolfgang, Dr.**
**Untergründemich 14**
**D-5063 Overath (DE)**

**EP 0 084 310 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Ameisenköder auf Basis von bestimmten Phosphorsäureestern und Zusatzstoffen, ein Verfahren zur Herstellung dieser Ameisenköder und deren Verwendung.

Es ist bereits bekannt geworden, daß Insektizide bei der Bekämpfung von Ameisen in den verschiedensten Zubereitungsformen eingesetzt werden können. Beispielsweise genannt seien Spritzmittel, Stäube, Sprühdosen und Köder. Da Ameisen häufig im näheren Wohnbereich von Menschen und von Haustieren anzutreffen sind und dort bekämpft werden müssen, gewinnen Köderpräparate sowohl wegen ihrer vergleichsweise geringen Gefährdung von Mensch und Haustier als auch wegen ihrer ganz allgemein hohen Umweltfreundlichkeit zunehmend an Bedeutung.

Die Zahl der insektiziden Wirkstoffe, die für die Verwendung in einem Ameisenköder in Betracht kommen, ist jedoch sehr gering, da die sehr empfindlich reagierenden Ameisen ihre Annahme meist verweigern. Besonders gilt dies dann, wenn die Köder die Wirkstoffe in hohen Konzentrationen enthalten, damit die Köder nicht nur eine kurze, über ein oder zwei Tage anhaltende Wirkung besitzen, sondern eine sich über viele Monate erstreckende Aktivität und Lagerstabilität aufweisen.

Als insektizid und akarizid wirksame Stoffe, die zur Bekämpfung von Ameisen eingesetzt werden können, sind 0,0-Diethylthionophosphoryl-α-oximino-phenylessigsäurenitril (phoxim) und 0,0-Diethylthionophosphoryl-α-oximino-(2-chlorphenyl)-essigsäurenitril (Chlorphoxim) schon seit vielen Jahren bekannt (vgl. DE-PS 1 238 902). Diese Substanzen lassen sich in Form von Sprüh- und Stäubemitteln anwenden.

Ferner ist versucht worden, Phoxim in Form einer Köderformulierung zur Bekämpfung von Ameisen einzusetzen (vgl. « Toxicological and Biological Studies of Odorous House Ant, Tapinoma sessile » in Journ, of econ. Ent. Vol. *63,* 1971-1973 (1970)). Dabei ergab sich, daß durch Köder, die 0,05 Gew.-% Phoxim im Gemisch mit Brombeersirup oder Brombeermarmelade enthalten, eine vollständige Kontrolle der Ameisen erzielt werden kann. Nachteilig ist aber, daß Köder mit einem so niedrigen Gehalt an Phoxim keine für praktische Zwecke ausreichend lange Lagerstabilität besitzen. Analoge Köder, in denen das Phoxim in einer Konzentration von 0,5 Gew.-% bis 1 Gew.-% vorhanden ist, weisen zwar eine für die Praxis genügende Stabilität und Wirkungsdauer auf, zeigen jedoch eine Repellentwirkung, so daß die Ameisen nicht an diesen Ködern fressen. Der Einsatz von Ködern, die Phoxim enthalten, hat also bisher bei der Ameisenbekämpfung nicht den gewünschten Erfolg erbracht.

Eine zusätzliche Schwierigkeit bei der Herstellung von Ködern auf Phoxim- bzw. Chlorphoxim-Basis liegt darin, daß die Wirkstoffe relativ temperaturempfindlich sind. Daher verbietet sich die Durchführung der üblichen Herstellungsmethode, die darin besteht, daß die Komponentenvermengt und erwärmt werden, um so die Viskosität des entsprechenden Gemisches herabzusetzen und es leichter rührbar zu machen.

Es wurden jetzt Ameisenköder gefunden, die aus

a) mindestens einen Wirkstoff der Formel

(I) 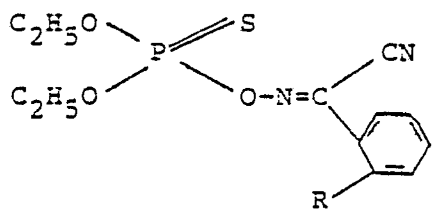

in welcher

R für Wasserstoff oder Chlor steht, und

b) — Glycerin oder

— Honig, gegebenenfalls im Gemisch mit Zucker und/oder Glycerin, oder

— Zucker gegebenenfalls im Gemisch mit Glycerin

bestehen, wobei der gehalt au Wirkstoff der Fonnel (I) zwischen 0,05 und 2 Gewichtsprozent liegt.

Weiterhin wurde gefunden, daß sich die erfingungsgemäßen Ameisenköder herstellen lassen, indem man mindestens einen Wirkstoff der Formel

(I) 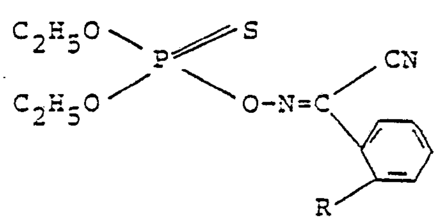

in welcher

R die oben angegebene Bedeutung hat,

mit

— Glycerin oder

— Honig, gegebenenfalls im Gemisch mit Zucker und/oder Glycerin, oder

— Zucker gegebenenfalls im Gemisch mit Glycerin

bei niedrigen Temperaturen in einem Kneter vermengt und das dabei entstehende Gemisch anschließend homogenisiert und abfüllt.

Schließlich wurde gefunden, daß die erfingungsgemäßen Köder sehr gut zur Bekämpfung von Ameisen verwendet werden können.

Es ist als äußerst überraschend zu bezeichnen, daß die erfindungsgemäßen Köder besser zur Bekämpfung von Ameisen geeignet sind als die aus dem Stand der Technik bekannten Köder, die Phoxim im Gemisch mit Brombeersirup oder Brombeermarmelade enthalten. Außerdem war nicht zu erwarten, daß die erfingungsgemäßen Köder im Gegensatz zu den schon bekannten, Phoxim enthaltenden Ködern auf Basis von Brombeersirup oder Brombeermarmelade auch bei einer Wirkstoffkonzentration von 0,5 bis 1,0 Gewichtsprozent keine Repellentwirkung auf Ameisen ansüben.

Als Wirkstoffe sind in den erfindungsgemäßen Ködern O,O-Diethylthionophosphoryl-α-oximino-phenylessigsäurenitril (Phoxim) und/oder O,O-Diethylthionophosphoryl-α-oximino-(2-chlorphenyl)-essigsäure-nitril (Chlorphoxim) enthalten. Diese Wirkstoffe, deren insektizide Eigenschaften und deren Einsatz sur Bekämpfung von Ameisen sind bereits bekannt (vgl. DE-PS 1 238 902).

Außer dem Wirkstoff bzw. dem Wirkstoffgemisch sind in den erfindungsgemäßen Ködern

— Glycerin oder

— Honig gegebenenfalls im Gemisch mit Zucker und/oder Glycerin, oder

— Zucker gegebenenfalls im Gemisch mit Glycerin

enthalten.

Unter Honig ist in diesem Zusammenhang sowohl Naturhonig als auch Kunsthonig zu verstehen.

Als Zucker kommen im vorliegenden Fall vorzugsweise Mono- und Disaccharide in Betracht. Beispiele für besonders bevorzugt in Frage kommende Monosaccharide sind Glucose, Galaktose und Fructose. Als Beispiele für Disaccharide seien Rohrzucker, Rübenzucker und Milchzucker genannt.

Besonders bevorzugte erfindungsgemäße Köder sind solche, in denen folgende Kombinationen aus Wirkstoff und Zusatzstoffen vorliegen :

Phoxim und Glycerin
Chlorphoxim und Glycerin
Phoxim und Naturhonig
Chlorphoxim und Naturhonig
Phoxim und Kunsthonig
Chlorphoxim und Kunsthonig
Phoxim, Naturhonig und Glycerin
Phoxim, Kunsthonig und Glycerin
Phoxim und Rohrzucker
Phoxim und Rübenzucker
Phoxim und Milchzucker
Phoxim, Rohrzucker und Glycerin
Phoxim, Rübenzucker und Glycerin
Phoxim, Milchzucker und Glycerin
Phoxim, Naturhonig und Rohrzucker
Phoxim, Rübenzucker und Naturhonig
Phoxim, Kunsthonig und Milchzucker
Phoxim und Glucose
Phoxim, Glucose und Glycerin
Phoxim und Galaktose
Phoxim, Galaktose und Glycerin
Phoxim und Fructose
Phoxim, Fructose und Glycerin.

Der Gehalt an Wirkstoffen kann in den erfindungsgemäßen Ködern innerhalb eines bestimmten Bereiches variiert werden. Die Konzentrationen an Wirkstoff der Formel (I) liegen zwischen 0,05 und 2 Gew.-%.

Die Mengenverhältnisse von Zucker, Honig und/oder Glycerin können in den Produkten, die im Falle der erfindungsgemäßen Köder mit den Wirkstoffen vermischt werden, innerhalb eines größeren Bereiches variiert werden. So können neben den Wirkstoffen der Formel (I) entweder nur Zucker oder Honig oder Glycerin als Zusatzstoffe enthalten sein. Bei den zugesetzten Produkten kann es sich jedoch auch um Gemische aus diesen Stoffen handeln. Ist das zugesetzte Produkt ein Gemisch aus Zucker und Honig, so entfallen auf 1 Gewichtsteil Zucker im allgemeinen 0,1 bis 10 Gewichtsteile, vorzugsweise 0,5

bis 8 Gewichtsteile Honig. Handelt es sich bei dem zugesetzten Produkt um ein Gemisch aus Zucker und Glycerin, so entfallen auf 1 Gewichtsteil Zucker im allgemeinen 0,05 bis 19 Gew.-Teile, vorzugsweise 0,25 bis 10 Gew.-Teile Glycerin. Handelt es sich bei dem zugesetzten Produkt um ein Gemisch aus Zucker, Honig und Glycerin, so entfallen auf 1 Gewichtsteil Zucker im allgemeinen 0,05 bis 2 Gewichtsteile Honig und 0,05 bis 8 Gewichtsteile Glycerin, vorzugsweise 0,1 bis 1 Gewichtsteil Honig und 0,1 bis 5 Gewichtsteile Glycerin.

Bei dem erfindungsgemäßen Verfahren zur Herstellung der neuen Ameisenköder kann die Temperatur innerhalb eines bestimmten Bereiches variiert werden. Im allgemeinen arbeitet man bei Temperaturen zwischen 10 °C und 30 °C, vorzugsweise bei Raumtemperatur.

Im einzelnen geht man bei der Durchführung des erfindungsgemäßen Verfahrens im allgemeinen so vor, daß man mindestens einen Wirkstoff der Formel (I) im jeweils gewünschten Mengenverhältnis mit den jeweiligen Zusatzstoffen innig vermengt, dann das dabei entstehende Gemisch homogenisiert und anschließend in die zur praktischen Anwendung bestimmten Behälter füllt.

Zum Vermengen der Komponenten können alle üblicherweise für derartige Zwecke verwendbaren Rührgeräte und Kneter eingesetzt werden. Die danach folgende Homogenisierung kann in allen üblicherweise dafür verwendbaren Geräten vorgenommen werden. Besonders vorteilhaft ist die Benutzung eines zur Homogenisierung von festen oder pastösen Substanzen geeigneten Walzenstuhles. Wenn die erfindungsgemäßen Köder Zucker enthalten, so ist es vorteilhaft, den Zucker in feingemahlener Form einzusetzen.

Die erfindungsgemäßen Ködermaterialien fallen bei der Herstellung nach dem erfindungsgemäßen Verfahren als feste oder pastöse, physikalisch und chemisch stabile, homogene Produkte an. Die Überprüfung der Lagerfähigkeit ergab, daß das Ködermaterial in wasserdichter Packung, die Verdunstungsverluste ausschließt, bei Lagertemperaturen bis zu 54 °C mindestens 8 Wochen, und bei Lagertemperaturen bis zu 40 °C mindestens 6 Monate keine Veränderungen zeigte.

Die erfindungsgemäßen Ködermaterialien können bei der Bekämpfung von Ameisen in allen für derartige Köderformulierungen üblichen Formen ausgebracht werden. Besonders vorteilhaft ist es, das Ködermaterial in kleinen Behältern zu verwenden. Dazu wird das Ködermaterial in kleine, 10 bis 50 ml fassende Behälter gefüllt. Das Ködermaterial wird entweder direkt in den Behälter gefüllt oder vorher auf ein saugfähiges Material, wie zum Beispiel Cellulose oder Watte, gegeben und dann in den zur Anwendung bestimmten Behälter gebracht. Das saugfähige Material kan sich auch vor dem Abfüllen des Ködermaterials in dem Behälter befinden.

Die Behälter sind mit einer oder mehreren zunächst verschlossenen Öffnungen versehen, die vor dem Einsatz zur Ameisenbekämpfung zum Beispiel durch Entfernen der vorher darüber befindlichen Abdeckung geöffnet werden, damit die Ameisen an das Ködermaterial gelangen können.

Mit Hilfe der erfindungsgemäßen Köder lassen sich Ameisen sowohl im Haushalts- und Hygiene-Bereich als auch in der Landwirtschaft und im Gartenbau an allen Stellen bekämpfen, wo sie unerwünscht sind. Man geht dabei so vor, daß man die erfindungsgemäßen Köder an den von Ameisen befallenen Orten aufstellt.

Die Herstellung und die Wirkung der erfindungsgemäßen Köder geht aus den nachfolgenden Beispielen hervor.

## Herstellungsbeispiele

### Vergleichsbeispiel A

999,5 g Zuckerrübensirup und 0,5 g Phoxim werden bei Raumtemperatur in einem Kneter 10 Minuten knetend gemischt. Danach wird das Gemisch über einen Walzenstuhl homogenisiert und in Portionen von je 50 mg in Kunststoffdöschen von 4 cm Durchmesser und 1,6 cm Höhe gefüllt. Die Dosen besitzen je eine seitliche Öffnung und werden nach ihrer Beschickung mit dem Köder mittels eines Deckels verschlossen.

Nach der im Vergleichsbeispiel A beschriebenen Methode werden auch die in der folgenden Tabelle I aufgeführten Köder hergestellt.

(Siehe Tabelle 1 Seite 5 f.)

Tabelle I

| Vergleichs-beispiel | Wirkstoff | Wirkstoffmenge in g | Zusatzstoff | Menge an Zusatzstoff in g | Wirkstoffkon-zentration im Köder in % |
|---|---|---|---|---|---|
| B | Phoxim | 0,5 | Himbeersirup | 999,5 | 0,05 |
| C | Phoxim | 1 | Himbeersirup | 999 | 0,1 |
| D | Phoxim | 1 | Brombeersirup | 999 | 0,1 |

Beispiel 1

490 g pulverisierter Rübenzucker, 200 g Naturhonig und 300 g Glycerin werden in einem Kneter vorgemischt. Danach gibt man 10 g Phoxim bei Raumtemperatur hinzu und mischt 10 Minuten knetend. Das entsprechende Gemisch wird dann über einen Walzenstuhl homogenisiert und in Portionen von je 50 mg in Kunststoffdöschen von 4 cm Durchmesser und 1,6 cm Höhe gefüllt. Die Dosen besitzen je eine seitliche Öffnung und werden nach ihrer Beschickung mit dem Köder mit einem Deckel verschlossen.

Nach der im Beispiel 1 beschriebenen Methode werden auch die in der folgenden Tabelle II aufgeführten Köder hergestellt.

(Siehe Tabelle II Seite 7-8 f.)

Tabelle II

| Beispiel-Nr. | Wirkstoff | Wirkstoffmenge in g | Zusatzstoffe | Menge an Zusatzstoffen in g | Wirkstoffkonzentration im Köder in % |
|---|---|---|---|---|---|
| 2 | Phoxim | 0,5 | Rübenzucker<br>Naturhonig<br>Glycerin | 499,5<br>200<br>300 | 0,05 |
| 3 | Phoxim | 1 | Rübenzucker<br>Naturhonig<br>Glycerin | 39<br>40<br>20 | 1,0 |
| 4 | Phoxim | 1 | Rübenzucker<br>Naturhonig<br>Glycerin | 399<br>400<br>200 | 0,1 |
| 5 | Phoxim | 1 | Rübenzucker<br>Naturhonig<br>Glycerin | 799<br>100<br>100 | C,1 |
| 6 | Phoxim | 1 | Rübenzucker<br>Naturhonig<br>Glycerin | 99<br>800<br>100 | 0,1 |
| 7 | Phoxim | 1 | Rübenzucker<br>Naturhonig<br>Glycerin | 19<br>70<br>10 | 1,0 |
| 8 | Phoxim | 1 | Rübenzucker<br>Naturhonig<br>Glycerin | 99<br>100<br>800 | 0,1 |

Tabelle II (Fortsetzung)

| Beispiel-Nr. | Wirkstoff | Wirkstoffmenge in g | Zusatzstoffe | Menge an Zusatzstoffen in g | Wirkstoffkonzentration im Köder in % |
|---|---|---|---|---|---|
| 9 | Phoxim | 1 | Naturhonig<br>Glycerin | 899<br>100 | 0,1 |
| 10 | Phoxim | 1 | Naturhonig<br>Glycerin | 89<br>10 | 1,0 |
| 11 | Phoxim | 1 | Naturhonig<br>Glycerin | 50<br>49 | 1,0 |
| 12 | Phoxim | 1 | Rübenzucker<br>Glycerin | 509<br>490 | 0,1 |
| 13 | Phoxim | 1 | Rübenzucker<br>Glycerin | 59<br>40 | 1,0 |
| 14 | Phoxim | 1 | Rübenzucker<br>Glycerin | 749<br>250 | 0,1 |
| 15 | Phoxim | 2,5 | Glycerin | 997,5 | 0,25 |
| 16 | Phoxim | 2,5 | Rübenzucker<br>Glycerin | 97,5<br>900 | 0,25 |

Verwendungsbeispiele

Ameisen-Fraßwahltest

Testtiere : Lasius niger (Arbeiterinnen und Larven)

Zur Herstellung eines zweckmäßigen Köders werden je 50 mg des jeweiligen Ködermaterials in eine Kunststoffdose I mit einem Durchmesser von 4 cm und einer Höhe von 1,6 cm gefüllt. Außerdem werden je 50 mg einer analogen wirkstoffreien Köderformulierung in eine Kunststoffdose II mit den den zuvor beschriebenen Abmessungen gegeben. Die Dosen I und II, die je eine seitliche Öffnung besitzen und nach ihrer Beschickung mit dem Ködermaterial mit einem Kunststoffdeckel verschlossen wurden, werden in eine größere, nach oben hin offene Kunststoffdose III gestellt, die einen Durchmesser von 11,5 cm und eine Höhe von 3,4 cm aufweist. Die Wände dieser Kunststoffdose III sind teflonisiert, um ein Herauskriechen der Ameisen zu verhindern. Die Dose III ist jeweils über einen 1 cm langen Kunststoffschlauch, der einen Innendurchmesser von 0,5 cm besitzt, mit einem Glasrohr von 20 cm Länge und einem Innendurchmesser von 2,3 cm verbunden. Das Glasrohr ist zu 25 % mit feuchtem Torf gefüllt und enthält 20 Ameisen (Arbeiterinnen) und 50 Ameisen-Larven. Durch eine schwarse Fotokartonhülle wird das Innere des Glasrohres dunkel gehalten. Die Ameisen haben bei dieser Versuchsanordnung die Möglichkeit, den wirkstoffhaltigen Köder bei einer eventuellen Repellentwirkung zu meiden und sich nur vom wirkstoffreien Köder zu ernähren.

Nach 7 Tagen wird der Abtötungsgrad in % bestimmt. Dabei bedeutet 100 %, daß alle Ameisen (Arbeiterinnen) abgetötet worden sind. 0 % bedeutet, daß überhaupt keine Ameisen abgetötet worden sind.

Zusammensetzung der geprüften Köder, Wirkstoffgehalte, sowie der %-Satz der abgetöteten Ameisen nach 7 Tagen geht aus der nachfolgenden Tabelle hervor.

Tabelle 1

Ameisen-Fraßwahltest

Versuchstiere : Lasius niger (Arbeiterinnen und Larven)

| Köder gemäß Beispiel | Wirkstoffkonzentration im Köder in % | Ameisen abgetötet nach 7 Tagen in % |
|---|---|---|
| bekannt: | | |
| A | 0,05 | 60 |
| B | 0,05 | 26,6 |
| C | 0,1 | 16 |
| D | 0,1 | 35 |
| erfindungsgemäß: | | |
| 1 | 1,0 | 98,3 |
| 2 | 0,05 | 95 |
| 3 | 1,0 | 95 |
| 4 | 0,1 | 92 |
| 5 | 0,1 | 95 |
| 6 | 0,1 | 100 |
| 7 | 1,0 | 100 |
| 8 | 0,1 | 95 |
| 9 | 0,1 | 92 |
| 10 | 1,0 | 100 |
| 11 | 1,0 | 100 |
| 12 | 0,1 | 95 |
| 13 | 1,0 | 98 |

Tabelle 1 (Fortsetzung)

| Köder gemäß Beispiel | Wirkstoffkonzentration im Köder in % | Ameisen abgetötet nach 7 Tagen in % |
|---|---|---|
| 13 | 1,0 | 98 |
| 14 | 0,1 | 83 |
| 15 | 0,25 | 97 |
| 16 | 0,25 | 92 |

Wie aus den obigen Versuchsergebnissen hervorgeht, üben die erfindungsgemäßen Köder im Gegensatz zu den vorbekannten Vergleichsködern keine Repellentwirkung aus. Bei Verwendung der erfindungsgemäßen Köder gingen die Ameisen nämlich in der angegebenen Versuchszeit zum größten Teil ein, bei Verwendung der im Vergleich dazu geprüften bekannten Köder war dies jedoch nicht der Fall.

**Patentansprüche**

1. Ameisenköder, bestehend aus
a) mindestens einem Wirkstoff der Formel

(I)

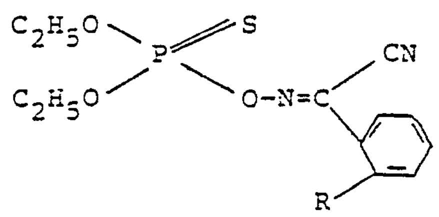

in welcher
R für Wasserstoff oder Chlor steht, und
b) — Glycerin oder
— Honig gegebenenfalls im Gemisch mit Zucker und/oder Glycerin oder
— Zucker gegebenenfalls im Gemisch mit Glycerin,
wobei der Gehalt an Wirkstoff der Formel (I) zwischen 0,05 und 2 Gew.-% liegt.

2. Verfahren zur Herstellung von Ameisenködern gemäß Anspruch 1, dadurch gekennzeichnet, daß man mindestens einen Wirkstoff der Formel

(I)

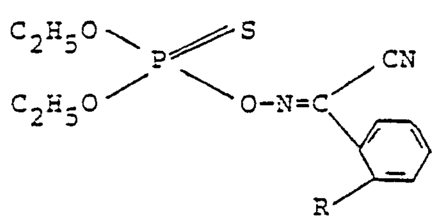

in welcher
R die oben angegebene Bedeutung hat,
mit
— Glycerin oder
— Honig, gegebenenfalls im Gemisch mit Zucker und/oder Glycerin, oder
— Zucker gegebenenfalls im Gemisch mit Glycerin
bei niedrigen Temperaturen in einem Kneter vermengt und das dabei entstehende Gemisch anschließend homogenisiert und abfüllt.

3. Verwendung von Ködern gemäß Anspruch 1 zur Bekämpfung von Ameisen.

**Claims**

1. Ant baits, consisting of
a) at least one active compound of the formula

(I)

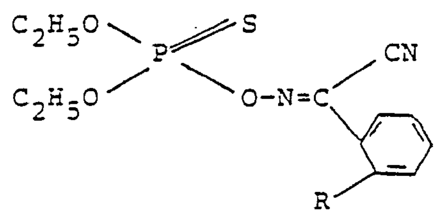

in which
R represents hydrogen or chlorine, and
b) — glycerol or
— honey, optionally mixed with sugar and/or glycerol or
— sugar, optionally mixed with glycerol,
the content of the active compound of formula (I) being between 0,05 and 2 % by weight.

2. Process for the preparation of ant baits according to Claim 1, characterised in that at least one active compound of the formula

(I)

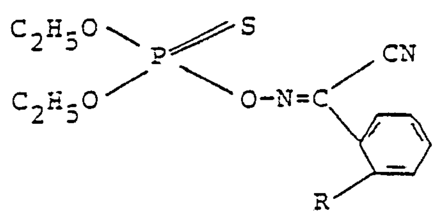

in which
R has the abovementioned meaning,
is mixed with
— glycerol or
— honey, optionally mixed with sugar and/or glycerol, or
— sugar, optionally mixed with glycerol,
at low temperatures in a kneader and the mixture produced thereby is subsequently homogenised and filled into containers.

3. Use of baits according to Claim 1 for combating ants.

**Revendications**

1. Appâts pour fourmis, comprenant
a) au moins une substance active de formule

(I)

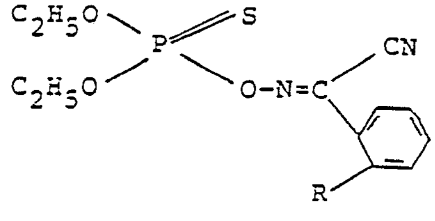

dans laquelle
R est l'hydrogène ou le chlore et
b) — de la glycérine ou
— du miel éventuellement en mélange avec du sucre et/ou de la glycérine ou
— du sucre éventuellement en mélange avec de la glycérine,
la teneur en substance active de la formule (I) étant comprise entre 0,05 et 2 % en poids.

2. Procédé de production d'appâts pour fourmis suivant la revendication 1, caractérisé en ce qu'on mélange au moins une substance active de formule

(I)

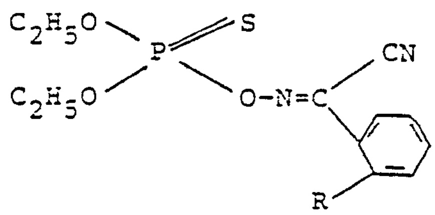

dans laquelle

R a la définition indiquée ci-dessus,

avec

— de la glycérine ou

— du miel, éventuellement en mélange avec du sucre et/ou de la glycérine, ou

— du sucre éventuellement en mélange avec de la glycérine

à basses températures dans un malaxeur, et on homogénéise ensuite et on décharge le mélange ainsi produit.

3. Utilisation d'appâts suivant la revendication 1, pour combattre des fourmis.